Europäisches Patentamt

European Patent Office

Office européen des brevets

(11)  EP 0 930 925 B1

(19)

(12)  **FASCICULE DE BREVET EUROPEEN**

(45) Date de publication et mention
de la délivrance du brevet:
**18.04.2001   Bulletin 2001/16**

(51) Int Cl.$^7$: **B01D 11/02**

(21) Numéro de dépôt: **97909396.0**

(86) Numéro de dépôt international:
**PCT/FR97/01823**

(22) Date de dépôt: **13.10.1997**

(87) Numéro de publication internationale:
**WO 98/16288 (23.04.1998 Gazette 1998/16)**

(54) **PROCEDE D'EXTRACTION PAR UN FLUIDE SUPERCRITIQUE**

VERFAHREN ZUR EXTRAKTION DURCH EIN ÜBERKRITISCHES FLUID

EXTRACTING METHOD USING A SUPERCRITICAL FLUID

(84) Etats contractants désignés:
**DE GB**

(30) Priorité: **14.10.1996  FR 9612494**

(43) Date de publication de la demande:
**28.07.1999   Bulletin 1999/30**

(73) Titulaire: **COMMISSARIAT A L'ENERGIE
ATOMIQUE**
**75015 Paris (FR)**

(72) Inventeurs:
• **SCHRIVE, Luc**
**F-30130 Pont Saint Esprit (FR)**
• **LABAT, Gilles**
**F-75011 Paris (FR)**

(74) Mandataire: **Des Termes, Monique et al
Société Brevatome
3, rue du Docteur Lancereaux
75008 Paris (FR)**

(56) Documents cités:
**DE-A- 4 223 029      US-A- 5 364 475**

• **CHEMICAL ABSTRACTS, vol. 124, no. 2, 8
janvier 1996 Columbus, Ohio, US; abstract no.
14689, A.YAZDI ET AL.: XP002054098 &
PROC.,ANNU.MEET. - AIR WASTE MANAGE.
ASSOC, vol. 13, 1994, pages 94-105,**
• **CHEMICAL ABSTRACTS, vol. 124, no. 14, 1 avril
1996 Columbus, Ohio, US; abstract no. 184553,
M.C.MENSINGER ET AL.: XP002054099 & ADV.
FILTR. SEP. TECHNOL., vol. 9, 1995, pages
720-731,**
• **CHEMICAL ABSTRACTS, vol. 126, no. 26, 30 juin
1997 Columbus, Ohio, US; abstract no. 344660,
A.MEYER ET AL.: XP002054100 & J.
CHROMATOGR. SCI., vol. 35, no. 4, 1997, pages
165-168,**

**Description**

La présente invention est relative à un procédé d'extraction de composés inorganiques et/ou éventuellement organiques par un fluide supercritique à partir d'un matériau.

Les composés extraits peuvent être en particulier des polluants qui sont aussi bien des composés inorganiques que des composés organiques toxiques utilisés en particulier pour la préservation du bois, toutefois les composés à extraire comprennent au moins un composé inorganique.

Le procédé selon l'invention permettent notamment le recyclage du matériau traité, en particulier, le recyclage ou la combustion du bois traité sans risque pour l'environnement.

Le procédé selon l'invention s'applique en particulier au traitement des matériaux solides notamment à base de bois.

En effet, le bois, malgré la création et la mise en oeuvre croissante de produits synthétiques tels que les plastiques, les élastomères et autres demeure un matériau très utilisé autant du fait de sa grande disponibilité, que de ses caractéristiques mécaniques, en particulier une bonne résistance à la flexion, ou encore d'aspects plus subjectifs, écologiques et culturels liés à la convivialité et à la chaleur qui sont attachées à ce produit naturel.

Sur un plan plus objectif, les études ont démontré les avantages apportés par le bois lorsqu'on analyse ses applications en termes de cycle de vie.

La comparaison de poteaux électriques en bois, ciment et acier est en effet en faveur des premièrs, tant sur le plan de l'énergie mise en jeu dans les processus de fabrication que sur le plan des effets environnementaux associés.

Toutefois, le bois est sensible aux attaques, notamment des champignons, insectes et bactéries, de ce fait en particulier les bois exposés à l'air humide doivent être traités chimiquement pour être protégés.

Les méthodes de traitement et de conservation consistent à faire pénétrer dans le bois des produits actifs fongicides, insecticides, etc..., ce traitement peut être superficiel ou profond dans le cas notamment des bois destinés à être utilisés à l'humidité au contact du sol tels que poteaux électriques ou traverses de chemin de fer, il est alors réalisé dans un autoclave, sous vide ou sous pression.

C'est l'un des inconvénients majeurs du bois que de nécessiter au début de son utilisation des traitements de préservation à base de produits toxiques qui se retrouvent ensuite en fin de vie.

Des procédés de détoxication sont alors nécessaires pour assurer aussi bien le recyclage, par exemple la fabrication de panneaux de particules, que le dépôt en décharge, ou l'élimination des bois traités dans des conditions acceptables pour l'environnement.

A l'heure actuelle, les composés polluants que l'on peut trouver dans les matériaux en bois en fin de vie proviennent de leur utilisation pour la préservation du bois il y a une trentaine d'années dans une production à grande échelle, et ces dix dernières années avec une consommation plus réduite.

Il s'agit notamment des composés inorganiques à base de cuivre, chrome et arsenic connus sous le terme CCA, et des composés organiques, en particulier des composés polyaromatiques dénommés HPA (hydrocarbures aromatiques polycycliques) ou « PAH » dans les ouvrages en langue anglaise, des chlorophénols et du lindane.

Les CCA sous forme d'oxydes ou de sels par exemple sulfate de cuivre, sont théoriquement insolubles une fois fixés dans la matrice du bois, bien qu'un délavage du cuivre et probablement des autres composés ait été démontré autour de piles marines traitées par ces composés.

Par contre, une fois la matrice dégradée par exemple par combustion, ces éléments peuvent se recombiner sous des formes solubles toxiques telles que l'arsenic trivalent et le chrome hexavalent.

Les HPA proviennent de coupes de distillation de houille, ils sont désignés par le terme "coal tar" dans les ouvrages en langue anglaise et sont un mélange de produits à caractère aromatique comprenant de 12 à 16 atomes de carbone ou plus.

Les composés majoritaires sont l'acénaphtène, le dibenzofurane, le fluorène, l'anthracène, le fluoranthène, le pyrène ; les composés minoritaires sont le benzo(a)anthracène, le benzo(b,k)fluoranthène et le benzo(a)pyrène (C20).

La plupart de ces composés sont mutagènes et/ou cancérigènes comme cela est notifié dans le Journal Officiel des Communautés Européennes, n°L36517 du 31.12.94.

Parmi les chlorophénols, citons le tétrachlorophénol, le pentachlorophénol, l'hexachlorobenzène (ou lindane).

Le pentachlorophénol composé mutagène est un précurseur des dioxines et notamment de la 2,3,7,8-tétrachlorodibenzo[1,4]dioxine encore dénommée TCDD, tandis que le lindane est un composé cancérigène.

Les quantités mises en jeu sont loin d'être négligeables : aux Etats-Unis, le seul recyclage annuel des poteaux traités en pentachlorophénol représente 1,5 million de poteaux.

Les quantités mises en jeu dans l'Union Européenne sont du même ordre de grandeur tant en bois créosotés, c'est-à-dire traités par des composés HPA : qui atteignent un million de $m^3$/an et qui sont constituées surtout par des traverses de chemin de fer et des poteaux qu'en bois traités par des chlorophénols dont la quantité est de 1,5 million de $m^3$/an pour le traitement des charpentes et les traitements anti-bleuissement.

Les matériaux en bois en fin de vie, contenant les composés toxiques ou potentiellement toxiques mentionnés ci-dessus ont longtemps été rejetés sans aucun traitement de détoxication dans des décharges plus ou moins contrôlées, ou bien ils ont été récupérés à des fins de chauffage domestique.

La mise en décharge s'accompagne d'une lixiviation lente des polluants par l'eau de précipitation, conduisant à la pollution des eaux souterraines, tandis que la combustion dans des conditions non optimisées produit en particulier des éléments toxiques volatils de type dioxine provenant de l'oxydation des chlorophénols, ou des éléments toxiques lourds constitués par des poussières comprenant des métaux lourds ou par des aérosols produits à partir des composés HPA.

Ainsi les cendres résiduelles de combustion des bois traités par les composés CCA atteignent elles des concentrations de l'ordre de 30% en poids de ces composés ce qui rend leur épandage tout à fait inenvisageable.

Il est donc indispensable de réaliser une détoxication des matériaux à base de bois en fin de vie afin d'en permettre le recyclage ou l'élimination. Pour effectuer la détoxication des matériaux à base de bois en fin de vie, contenant les produits toxiques issus de leur traitement initial de préservation indiqués plus haut plusieurs procédés ont été proposés.

Un de ces procédés est la biodégradation par des champignons de pourriture du bois. Ces travaux appliqués aux polluants organiques ne montrent pas une réelle efficacité ; à grande échelle, la diminution de la concentration du pentachlorophénol atteint seulement 60%. D'autre part, on ne sait rien ou presque du devenir des produits chlorés après leur assimilation par les micro-organismes.

La combustion est une autre solution. En général, le bois pollué est mélangé au bois sain dans des proportions de 1 partie de bois pollué pour 4 parties de bois sain. La combustion nécessite d'être rigoureusement contrôlée si l'on veut éviter de rejeter des proportions importantes de polluants tels que CO, $NO_x$, hydrocarbures, dioxines. Dans cer-tains cas, la combustion simultanée de produits organiques et inorganiques peut même catalyser la formation de dioxines.

A partir des cendres, la récupération des métaux lourds peut se faire par une méthode classique d'attaque acide suivie d'une complexation puis d'une extraction par un solvant organique. Cette technique pourrait être employée sur la matrice bois. D'autres techniques envisagent la transformation par des microorganismes des mêmes métaux fixés dans le bois en complexes solubles.

L'utilisation de fluides supercritiques tels que le gaz carbonique supercritique à des fins d'extraction de divers composés est depuis longtemps largement répandue dans l'industrie.

Ainsi des procédés mettant en oeuvre des fluides supercritiques ont ils été développés pour la dépollution à partir de différentes matrices tels que l'eau, les sols et aussi le bois.

Cependant, la plupart des procédés décrits traitent de la dépollution des sols ou de l'eau, et les polluants sont pour l'essentiel de nature organique.

Lorsque les procédés mettant en oeuvre des fluides supercritiques concernent le bois, ces procédés s'appliquent systématiquement aux produits organiques. En particulier, ils ont pour but l'extraction de produits naturels contenus dans la matrice, l'imprégnation de produits de conservation ou de renforcement et enfin l'extraction de ces mêmes produits en fin de vie du bois.

De plus, les procédés décrits relatifs au bois sont décrits exclusivement à des fins analytiques et portent sur des quantités très faibles, de quelques millilitres ou milligrammes et ne permettent pas le traitement à une échelle industrielle de quantités importantes de bois.

L'extraction de métaux et autres composés inorganiques par des fluides supercritiques concerne uniquement la dépollution de sols ou de milieux aqueux.

Du fait de l'absence d'affinité entre les fluides supercritiques, en particulier le $CO_2$ et les composés minéraux, l'ajout d'un agent complexant est obligatoire. Le rôle de cet agent complexant est d'emprisonner chimiquement la molécule inorganique. L'utilisation d'un agent complexant présente entre autres les inconvénients suivants :

-    l'agent complexant choisi est spécifique à un composé métallique donné, ou à une famille de composés de même valence ; donc, dans le cas des composés « CCA », la présence de trois éléments métalliques différents (cuivre, chrome, arsenic) devrait nécessiter l'utilisation de trois complexants également différents;
-    l'agent complexant impose un temps de réaction lié à sa propre cinétique de complexation;
-    la séparation de l'ion métallique du complexant est difficile à réaliser en raison du type de liaison chimique mis en jeu.

Ainsi, le document Chemical Abstracts, vol. 124, n° 2, 8 janvier 1996, Colcanbus, Ohio, abstract n° 14 689 et Proc. ANNU. MEET. - AIR WASTE MANAGE. Assoc. vol. 13, 1994, pages 94 à 105 décrit t'il l'extraction d'au moins un composé inorganique par mise en contact d'un matériau avec un fluide supercritique auquel on a ajouté des polyperfluoroéthers dérivatisés avec des fonctions conférant des propriétés de chélatant ou complexant. Ces additifs sont donc des chélatants ou complexants et non des surfactants.

Au regard de l'étude qui précède, on constate que l'extraction des composés inorganiques, éventuellement associés à des composés organiques à partir de matériaux en particulier solides, est extrêmement difficile à réaliser, et présente de nombreux inconvénients, en particulier, aucun procédé ne décrit à ce jour l'extraction de polluants inorganiques, en particulier de type "CCA" contenus dans une matrice de bois.

Il existe donc un besoin non encore satisfait pour un procédé permettant d'extraire des composés inorganiques et éventuellement organiques à partir de matériaux en particulier solides tels que des matériaux à base de bois, ce procédé devant notamment permettre la détoxication de matériaux solides en particulier de matériaux à base de bois contenant des polluants inorganiques et éventuellement organiques.

Le but de la présente invention est donc de fournir un procédé qui permette de satisfaire à ces besoins, qui ne présente pas les inconvénients des procédés de l'art antérieur, basés notamment sur l'utilisation de fluides supercritiques en présence de complexant, et qui réalise l'extraction de composés inorganiques et éventuellement inorganiques d'un matériau avec un fort rendement d'extraction, tout en permettant le traitement de grandes quantités de matériaux en mettant en oeuvre des réactifs courants et pour un faible coût.

Ce but et d'autres encore sont atteints conformément à l'invention par un procédé d'extraction de composés inorganiques et/ou organiques à partir d'un matériau en particulier solide, caractérisé en ce que l'on met en contact ledit matériau avec un fluide dense sous une pression (P) et une température (T) telles que le fluide soit à l'état supercritique, en ce qu'un ou plusieurs additif(s) est(sont) ajouté(s) au fluide supercritique, un desdits additifs étant un surfactant choisi parmi les polyperfluoroéthers de formule suivante: $F(CF_3CFCF_2O)_mCF_3CFCOOH$, et en ce que les composés à extraire comprennent au moins un composé inorganique.

Le procédé selon l'invention permet de réaliser l'extraction des composés inorganiques et éventuellement organiques se trouvant dans le matériau tel que le bois, qu'il s'agisse de produits naturels ou de produits d'imprégnation, avec un rendement très élevé et quasiment quantitatif.

Ce procédé permet en particulier d'éliminer de façon presque totale les polluants inorganiques et/éventuellement organiques de la matrice en particulier solide telle que la matrice bois et le matériau traité peut être réutilisé ou brûlé sans aucun risque pour l'environnement.

Les produits extraits de la matrice en particulier solide telle que la matrice bois, lorsqu'il s'agit de produits toxiques aussi bien naturels qu'artificiels, organiques qu'inorganiques peuvent être séparément et spécifiquement manipulés, traités et éliminés.

Avantageusement, le procédé selon l'invention, comprend suite à l'extraction un recyclage du gaz, qui est encore appelé fluide-solvant, après une ou plusieurs étapes de séparation physico-chimiques permettant de séparer le fluide solvant des extraits.

De manière classique, les premières étapes de séparation consistent en une diminution de la masse volumique du fluide-solvant par une série de détentes et réchauffages successifs afin de se rapprocher de l'état gazeux. Le pouvoir solvant du fluide diminue et l'on récupère ainsi une partie des extraits précédemment solubilisés lors de l'étape d'extraction.

Ainsi dans le cadre de la dépollution du bois, le procédé selon l'invention permet de séparer physiquement en fin de traitement, d'une part un matériau recyclable qui représente généralement à peu près 90% du produit initial, sans danger pour l'utilisateur ou l'environnement, d'autre part des produits toxiques, naturels ou artificiels, inorganiques et éventuellement organiques, représentant environ 10% du produit initial dont la manipulation, le traitement ou l'élimination peut se faire de manière spécifique et donc aisément maîtrisée. Tandis que le gaz ou fluide solvant peut avantageusement être recyclé afin de réaliser une nouvelle extraction.

Selon une caractéristique essentielle de l'invention, les composés à extraire comprennent au moins un composé inorganique ou sont des composés inorganiques, et un surfactant spécifique est ajouté au fluide supercritique.

En effet, de manière surprenante, l'invention au contraire des procédés de l'art antérieur permet l'extraction des composés inorganiques contenus dans les matériaux en particulier les matériaux solides tels que le bois, une telle extraction de composés inorganiques, tels que des polluants inorganiques, par un fluide supercritique à partir de matériaux en particulier de matériaux solides tels que le bois n'a jusqu'à présent jamais été décrite ni suggérée.

On bien alors, lorsque l'on veut extraire des composés inorganiques, minéraux tels que des métaux à partir de certains autres milieux, on a vu qu'il était obligatoire d'ajouter un agent complexant au fluide supercritique, le rôle d'un tel agent complexant est d'emprisonner chimiquement la molécule inorganique tel qu'un métal en mettant en oeuvre des liaisons chimiques fortes de type liaisons covalentes.

Selon l'invention, l'additif utilisé n'est pas un complexant, molécule disponible en faibles quantités et à un prix élevé, mais un simple tensio-actif ou surfactant. Une telle utilisation n'a pas été décrite ni suggérée dans le domaine de l'extraction par des fluides supercritiques ou autre tel que le domaine de l'industrie du bois.

L'utilisation de tensio-actifs est en effet seulement mentionnée dans des cas particuliers tels que la fabrication d'agents ligands ou encore en tant qu'additif d'imprégnation, et en aucun cas l'agent tensio-actif n'est mis en oeuvre tel quel, autrement dit pur, non modifié, pour extraire des composés inorganiques tels que des métaux à partir du bois. Dans le procédé de l'invention, l'agent tensio-actif ou surfactant est utilisé pur, sans modification chimique ou fonctionnalisation. La fonctionnalisation confère à une molécule une affinité pour certains composés inorganiques ou organiques, mais cette affinité est une affinité extrêmement spécifique vis-à-vis d'un seul composé. Il faut recourir à une fonctionnalisation différente, souvent difficile à réaliser, pour chaque composé à extraire.

Selon l'invention, les molécules inorganiques et de surfactant s'aggrègent les unes aux autres par des énergies de surface de type hydrophiles/hydrophobes.

L'ordonnancement des molécules de composés inorganiques et de tensioactif amènent à la création de micelles qui renferment les composés inorganiques.

Cette utilisation d'un surfactant est radicalement différente de son emploi habituel dans des domaines très éloignés de l'extraction par les fluides supercritiques.

Classiquement, les surfactants améliorent l'imprégnabilité ou le dépôt de substances, notamment des polymères.

Dans notre cas, il sert d'additif à l'extraction de composés inorganiques.

De plus la récupération et le recyclage du surfactant peuvent être réalisées par simple inversion de phase de l'émulsion obtenue après l'étape de séparation du fluide supercritique, telle qu'elle est décrite en détail plus loin.

Selon une autre caractéristique de l'invention, le fluide supercritique, pour l'extraction de composés inorganiques peut voir ses caractéristiques physico-chimiques modifiées par l'addition de divers composés additifs en particulier liquides.

De même, il est possible de modifier en particulier in-situ les caractéristiques des composés à extraire, c'est-à-dire des solutés, notamment lorsqu'il s'agit de composés polaires, afin en particulier de les rendre plus solubles dans le fluide supercritique solvant.

En outre, de façon avantageuse, il est possible de fixer des conditions de température et de pression ainsi que de faire varier ces conditions au cours du procédé afin de favoriser l'un ou l'autre phénomène régissant en particulier le pouvoir solvant afin d'améliorer l'extraction des composés en cause.

L'invention sera mieux comprise à la lecture de la description suivante, faite en référence aux dessins joints, dans lesquels :

- la figure 1 représente un diagramme des phases illustrant le domaine supercritique du gaz carbonique, la pression (bars) étant portée en ordonnées et la température (°C) en abscisses ;
- la figure 2 représente de manière schématique une vue latérale en coupe d'un exemple d'installation pour la mise en oeuvre du procédé selon l'invention.

La présente invention concerne donc un procédé d'extraction de composés inorganiques et/ou organiques à partir d'un matériau, caractérisé en ce que l'on met en contact ledit matériau avec un fluide dense sous une pression (P) et une température (T) telles que le fluide soit à l'état supercritique, en ce qu'un ou plusieurs additif(s) est(sont) ajouté(s) au fluide supercritique, un desdits additifs étant un surfactant spécifique, et en ce que les composés à extraire comprennent au moins un composé inorganique.

Ainsi, dans le procédé selon l'invention, on met en oeuvre par exemple un composé, gazeux dans les conditions normales de température et de pression, et on augmente sa masse volumique en augmentant sa pression. En modifiant également la température on va se placer ainsi dans le domaine où le fluide se trouve dans son état supercritique. Ce domaine peut être facilement déterminé par l'homme du métier dans ce domaine de la technique.

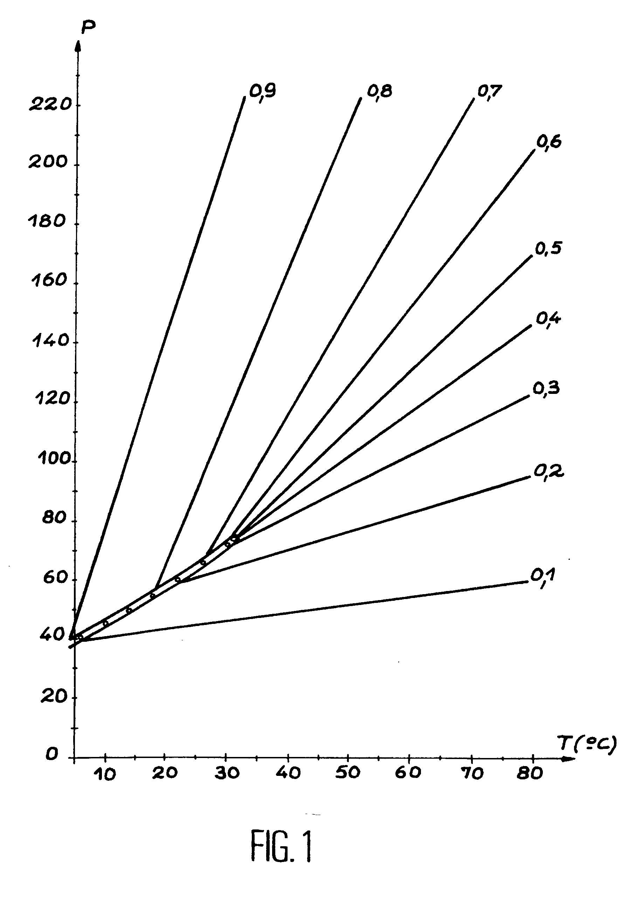

Ainsi, sur la figure 1, on donne le diagramme des phases du $CO_2$ avec en ordonnées la pression (en bars) et en abscisses la température (en °C) on a également représenté sur ce diagramme les lignes de densité constante depuis 0,9 (en haut, à gauche) jusqu'à 0,1 (en bas, à droite).

Le domaine supercritique du $CO_2$ est également délimité sur ce diagramme.

Selon l'invention, on peut faire varier de manière contrôlée les propriétés extractives du fluide en agissant sur les deux paramètres de températures et de pression tout en restant dans le domaine supercritique du fluide en question : ainsi, l'augmentation de la pression et de la température augmentent la capacité de solubilisation tandis que la diminution de la pression diminue la viscosité et augmente la diffusivité.

Ces deux caractéristiques permettent de maîtriser un fluide dont le pouvoir solvant est modulable en termes de solubilisation, notamment des composés légers du bois, et de cinétique d'extraction notamment à l'intérieur de la matrice solide par exemple de la matrice solide poreuse formant le bois.

Le fluide utilisé peut être choisi par exemple parmi le dioxyde de carbone, l'hexafluorure de soufre, l'oxyde nitreux, les alcanes légers ayant par exemple de un à cinq atomes de carbone tels que le méthane, l'éthane, le propane, le butane, l'isobutane, le pentane, etc...

On peut bien sûr utiliser tout composé pouvant présenter un état supercritique et dont l'utilisation reste compatible avec les matériaux traités par exemple les matériaux à base de bois.

Le dioxyde de carbone est préféré car il présente l'avantage d'une mise en oeuvre relativement facile : il est bon marché, non toxique, ininflammable et possède des conditions critiques facilement accessibles (pression critique :

Pc 7,3 Mpa et température critique Tc de 31,1°C).

Les masses volumiques du fluide pendant l'étape d'extraction varient de 350 kg/m$^3$ à 1000 kg/m$^3$. A l'état liquide, sa masse volumique est classiquement de 900 à 1000 kg/m$^3$. Les étapes de séparation se font pour des valeurs de la masse volumique de 100 à 150 kg/m$^3$.

La figure 1 déjà mentionnée, qui représente le diagramme d'état du $CO_2$, illustre ces propriétés.

Tout type de matériau, sans limitation aucune peut être traité par le procédé de l'invention. Ce matériau peut être organique, minéral ou autre.

Le matériau peut être un matériau liquide tel qu'une solution, suspension ou autre... cette solution ou suspension pouvant être une solution ou suspension dans un solvant ou liquide de mise en suspension quelconque choisi par exemple parmi l'eau, les solvants organiques et leurs mélanges.

Les matériaux qui peuvent être traités par le procédé de l'invention sont cependant généralement des matériaux solides de préférence des matériaux poreux. De préférence, le matériau est un sol naturel ou artificiel, du sable siliceux, calcaire ou autre etc... De préférence encore, le matériau traité est un matériau à base de bois.

Par matériau à base de bois traités par le procédé selon l'invention, on entend non seulement les matériaux constitués de bois à l'exclusion de tout autre matériau, mais également les matériaux comprenant une proportion majoritaire de bois tels que les débris de construction, les palettes et cagettes de transport, et les matériaux composites à base de bois par exemple les matériaux composites tels que les panneaux de particules, les agglomérés, les contre-plaqués ou les lamellés-collés.

La nature du bois traité est variable, n'importe quelle essence de bois peut être traitée par le procédé selon l'invention, il pourra s'agir par exemple de résineux tels que pin sylvestre, pin maritime, pin laricio, mélèze, sapin, épicéa, douglas, ou de chêne, châtaignier, robinier, peuplier, érable, etc... ou encore d'essences exotiques.

Le bois peut être un bois naturel n'ayant subi aucun traitement ou bien il peut s'agir d'un bois traité, mis en oeuvre dans divers domaines tels que la construction en génie civil, la fabrication maritime, les poteaux électriques ou téléphoniques, les supportages de transformateurs électriques, la palettisation, en particulier il peut s'agir d'un bois en fin de vie que l'on doit soumettre à une opération de détoxication.

Lorsqu'il est indiqué extraction « à partir d'un matériau », cela signifie que le ou les composés à extraire peuvent se trouver aussi bien à l'intérieur du matériau, au sein même de sa porosité, mais ils peuvent aussi se trouver en surface du matériau.

Le procédé selon l'invention permet d'extraire tout composé inorganique et éventuellement organique se trouvant dans le matériau par exemple dans le bois, il peut s'agir en premier lieu de produits naturels contenus dans la matrice du matériau. Dans le cas du bois, il peut s'agir par exemple de terpènes, d'acides gras de résine de pin, de pyréthroïdes.

Les composés inorganiques et éventuellement organiques peuvent également être des produits introduits dans le matériau tel que le bois notamment à des fins de conservation, de protection, de toutes sortes, ou autres.

Le procédé selon l'invention trouve ainsi en particulier son application à la détoxication de matériaux tels que les matériaux à base de bois, en particulier en fin de vie, et dont on souhaite extraire les polluants qui s'y trouvent.

Les composés inorganiques extraits par ce procédé selon l'invention ont pour certains déjà été mentionnés ci-dessus.

Les composés sont par exemple des métaux ou métalloïdes libres ou des composés de métaux ou de métalloïdes.

Par composés de métaux ou de métalloïdes, on entend tous les composés dérivés de ces métaux ou métalloïdes en particulier leurs oxydes ou sels, les dérivés organométalliques etc... Parmi les sels, on peut citer les nitrates, les sulfates, les chlorures etc... hydratés ou non.

Il s'est avéré que le procédé selon l'invention était particulièrement efficace pour extraire des sels métalliques à partir de matériaux y compris liquides.

Les métaux ou métalloïdes ci-dessus sont choisis en particulier parmi les métaux lourds ; les métaux de la famille du cuivre ou « métaux nobles », tels que le cuivre, l'argent, l'or, le platine, le palladium, le nickel, le cobalt, le rhodium, l'iridium ; le zinc, le cadmium, le mercure ; les métaux de la famille du chrome tels que le molybdène, le tungstène, etc, ... ; les lanthanides : lanthane, cérium, etc... ; les actinides : actinium, thorium, protactinium, uranium ; les transuraniens : neptunium, plutonium, américium, curium, berkélium etc... ; les métaux alcalins et alcalino-terreux : césium, francium, magnésium, calcium, strontium, baryum, radium, etc... ; l'étain, les plomb ; les métalloïdes sont choisis parmi l'arsenic, le bore etc...

Ces métaux et métalloïdes libres ou sous forme de leurs composés peuvent être présents sous la forme de leurs isotopes radioactifs ou non.

Le procédé selon l'invention est donc particulièrement intéressant dans la cadre de la décontamination de matériaux contaminés par des produits radioactifs, par exemple des liquides tels que des solutions contenant des sels métalliques, des sols ou autres.

Dans le cas par exemple du bois lesdits composés inorganiques seront donc par exemple des composés inorganiques à base de cuivre, de chrome et arsenic connus sous le terme de "CCA" utilisés pour la préservation du bois en particulier sous la forme d'oxydes ou de sels métalliques.

Plus précisément les CCA désignent des composés présents sous forme d'acide arsénique, d'anhydride chromique, d'oxyde cuivrique, d'arséniate de chrome et d'arsenic libre.

Le procédé selon l'invention permet également d'extraire d'autres métaux et dérivés métalliques se trouvant dans le matériau par exemple dans le bois, on peut citer par exemple le tributyl étain, le TBTN (naphténate de tribulylétain), le TBTO (oxyde de tributyl étain), le Cu HDO (complexant métallique du cuivre), ou d'autres composés organométalliques.

Selon l'invention au moins un des composés à extraire est un composé inorganique tel que défini ci-dessus.

Mais le procédé selon l'invention, permet simultanément à l'extraction de ce au moins un composé inorganique, l'extraction d'un ou plusieurs autre(s) composé(s) qui sont un (des) composé(s) organique(s) se trouvant également dans (ou sur) le matériau traité.

Les composés organiques auxquels peut aussi s'appliquer le procédé selon l'invention sont tous les composés organiques susceptibles de se trouver dans le matériau tel que le bois par exemple à des fins de préservation, protection ou autres et qui en particulier en fin de vie de ce bois constituent des polluants qui doivent être éliminés pour permettre la réutilisation, le recyclage du matériau par exemple du matériau à base de bois ou sa destruction sans risques pour l'environnement. D'autres polluants dus à l'utilisation du matériau par exemple du bois dans des applications où il est en contact avec des composés organiques souvent toxiques peuvent aussi être extraits grâce au procédé selon l'invention.

Parmi ces composés organiques on peut ainsi citer les PCB ou polychlorobiphényles qui contaminent le bois présent dans les transformateurs électriques, les chlorophénols et polychlorophénols (PCP), ainsi que d'autres composés organochlorés tel que le lindane, les composés organiques polyaromatiques (HPA) contenus dans les produits de traitement connus sous le nom de créosote.

Le procédé selon l'invention est également applicable à l'extraction de composés organiques de type triazole, pyréthroïdes de synthèse, insecticides et fongicides présents en particulier dans des matériaux tels que déchets de bois adjuvantés, ainsi qu'à l'extraction de divers adjuvants du bois et autres matériaux tels que produits de préservation, colles, produits de finition, etc...

Parmi les associations de composés inorganiques et organiques qui peuvent être extraits par le procédé de l'invention on peut citer les CCB qui ont une formulation du même type que les CCA cités ci-dessus mais sans dérivés d'arsenic et avec des composés de bore tels que l'acide borique et les sels du bore ; les CCF qui ont une formulation du même type que les CCA mais sans dérivés d'arsenic et avec des composés du fluor ; les C-triazole qui sont des dérivés du cuivre associés à des composés organiques de la famille des triazoles ; les C-AQ qui sont des dérivés du cuivre associés à des composés d'ammonium quaternaires (AQ).

Il est à noter que dans la description, par soucis de simplification, on a utilisé les termes « composés organiques » et « inorganiques » au pluriel, il est bien évident que le procédé selon l'invention peut ne concerner outre un seul composé inorganique qu'un composé organique.

Selon l'invention, il est possible d'extraire les composés inorganiques tels que des métaux du fait de l'addtition d'un surfactant ou tensio-actif spécifique au fluide supercritique.

Selon l'invention, on a constaté que les polymères perfluorés donnaient les meilleurs résultats d'extraction, le surfactant est donc choisi parmi les polyperfluoroéthers du type de ceux commercialisés sous le nom de "KRYTOX"® qui répondent à la formule suivante : $F(CF_3CFCF_2O)_nCF_3CFCOOH$ et dont la caractéristique essentielle est d'être un acide carboxylique. Un composé préféré est le KRYTOX 157 FSL de masse molaire 2500 g/mole.

Comme on l'a déjà indiqué ci-dessus, l'invention permet pour la première fois et de manière totalement surprenante l'extraction par un fluide supercritique de composés inorganiques, en particulier de polluants inorganiques se trouvant dans un matériau tel que le bois.

De même, la mise en oeuvre d'un agent tensio-actif, totalement différente de celle d'un agent complexant, est totalement inattendue, l'utilisation tel quel, pur, non modifié, non fonctionnalisé d'un tensio-actif ou surfactant pour extraire des composés inorganiques tels que des métaux à partir d'un matériau en particulier d'un matériau solide tel qu'un matériau à base de bois n'ayant jamais été décrite ou suggérée jusqu'alors.

Le tensioactif, choisi dans la famille des polyperfluoroéthers de type KRYTOX®, permet d'extraire directement les composés inorganiques tels que les CCA.

Son rôle n'est alors plus seulement de lubrifier l'interface par exemple l'interface "bois/$CO_2$" comme dans le cas de l'imprégnation, mais bien d'entraîner les composés indésirables par un phénomène de type micellisation.

Enfin, l'utilisation habituelle du KRYTOX se situe dans un domaine technique extrêmement éloigné de celui des fluides supercritiques.

Il est classiquement un adjuvant pour peinture, dont le rôle est de favoriser le contact à l'interface surface/peinture, son utilisation en conjonction avec un fluide supercritique et dans un rôle véritable d'agent d'extraction est ainsi complètement surprenante.

La concentration du tensio-actif peut varier entre de larges limites : elle peut être par exemple de 1 à 50% en poids, de préférence de 2 à 30%, de préférence encore 10%, cette concentration étant exprimée par rapport au poids total initial du matériau traité.

L'addition d'eau en association avec le surfactant, en particulier le KRYTOX, permet d'accroître encore le rendement de l'extraction, la concentration de l'eau exprimée en pourcentage en poids par rapport au poids total du matériau traité, par exemple du matériau à base de bois, étant par exemple de 1 à 300%, de préférence de 10 à 200%, de préférence encore de 20 à 100% par exemple 100%. On observe un véritable effet synergique lorsque par exemple le KRYTOX et l'eau sont ainsi associés.

L'eau peut se trouver en partie déjà présente dans le matériau par exemple dans le bois, et l'on n'ajoutera alors dans le fluide supercritique que la quantité nécessaire pour donner les concentrations mentionnées plus haut.

Le fluide supercritique, c'est-à-dire le gaz sous pression peut voir ses caractéristiques physico-chimiques modifiées par l'addition de divers composés jouant le rôle de cosolvant, en particulier liquides, de préférence polaires, tels que l'eau déjà citée, à une concentration par exemple de 5 à 20% en poids, par rapport au poids du matériau par exemple du matériau à base de bois, les alcools, en particulier le méthanol à une concentration par exemple de 1 à 10%, les cétones en particulier l'acétone à une concentration par exemple de 1 à 10%, dans ce cas on modifie le moment dipolaire du gaz ce qui lui confère un pouvoir accru vis-à-vis des composés polaires.

Il est également possible de modifier in-situ les caractéristiques des composés à extraire, c'est-à-dire des solutés, afin, en particulier de les rendre plus solubles dans le fluide supercritique.

On peut par exemple greffer chimiquement une "queue" organophile sur la molécule de soluté afin d'en réduire la polarité.

Ainsi, dans le cas des chlorophénols, on peut réaliser une acétylation ou de manière générale une "dérivatisation" de ces composés, en faisant réagir par exemple avec ceux-ci de l'anhydride acétique en excès en présence ou non de triéthylamine. L'anhydride acétique en plus de son rôle d'acétylation joue également le rôle de cosolvant, et dans ces conditions, le temps d'extraction se trouve fortement réduit et peut être divisé par un facteur 3 ou plus et le rendement d'extraction est également accru par rapport à un procédé mettant en oeuvre un fluide supercritique tel que le $CO_2$ pur ou avec un cosolvant classique par exemple le méthanol.

Les gammes de température et de pression mises en oeuvre au cours de l'opération d'extraction peuvent varier, à la condition que le fluide reste toujours dans un état supercritique.

Les gammes de température et de pression sont fonction en particulier de la nature du fluide supercritique utilisé.

Généralement des températures de 20 à 120°C et des pressions de 30 à 500 bars sont adéquates.

Ainsi, dans le cas du $CO_2$ les gammes de pression et de température sont de 50 à 350 bars et de 20 à 100°C de préférence de 300 bars et de 80°C.

De telles conditions peuvent être maintenues pendant toute la durée du procédé, ou bien seulement au début du procédé d'extraction, où de telles conditions correspondant à une forte masse volumique et à une température élevée - le phénomène prépondérant étant la solubilisation - permettent d'extraire très rapidement les composés extérieurs à la matrice.

Après quelques minutes c'est-à-dire par exemple après 5 à 20 minutes et compte tenu du régime diffusif, l'extraction devient plus favorable lorsque, à masse volumique constante, la viscosité du fluide supercritique est diminuée, c'est le cas en abaissant les conditions opératoires par exemple à une pression de 90 à 150 bars et à une température de 40 à 50°C par exemple de 150 bars et 42°C.

Dès que le temps d'extraction dépasse quelques minutes, c'est-à-dire par exemple de 20 à 60 minutes, on peut considérer que l'extraction est totale avec un rendement voisin de 99,9%.

Les rendements d'extraction sont dans tous les cas très élevés même lorsque les composés à extraire comprennent des composés chlorés où l'on atteint un rendement de 98%.

Le taux de solvant utilisé, c'est-à-dire le poids de fluide-solvant supercritique mis en oeuvre par rapport au poids de matériau à base de bois est en général de 10 à 100 kg de fluide/kg de matériau traité par exemple de matériau à base de bois.

Suite au procédé d'extraction proprement dit, le procédé selon l'invention comprend avantageusement une ou plusieurs étapes, par exemple jusqu'à 3 étapes de séparation physicochimiques, dans lesquelles on diminue la masse volumique du fluide solvant, par exemple par une série de détentes et de réchauffages successifs au nombre de préférence de 1 à 3, afin de se rapprocher de l'état gazeux. Les conditions régnant dans ces étapes successives seront par exemples les suivantes : 150 bars et 50°C, 100 bars et 60°C et 50 bars et 60°C.

Du fait que le pouvoir solvant du fluide diminue, on récupère ainsi les extraits précédemment solubilisés lors de l'étape d'extraction.

Ces extraits se présentent sous la forme de liquides concentrés plus ou moins fluides, et peuvent être soit soumis encore à une opération de purification s'il s'agit de produits présentant un intérêt, par exemple dans le cas de produits naturels présents dans le bois, soit spécifiquement traités et éventuellement détruits s'il s'agit de polluants ou de produits toxiques.

Le gaz obtenu à l'issue de la séparation est de préférence recyclé vers l'étape d'extraction où il est reconditionné afin de le remettre dans des conditions de température et de pression pour qu'il soit dans un état supercritique, le gaz peut ainsi être tout d'abord refroidi à la pression atmosphérique, stocké sous forme liquide, puis réchauffé et comprimé avant d'être envoyé dans le procédé d'extraction proprement dit.

Avant son recyclage, le gaz est de préférence purifié, par exemple par du charbon actif, afin d'éliminer les traces de produits organiques volatils non séparés lors de l'étape précédente.

En effet, une purification poussée du gaz est généralement nécessaire sous peine de réduire grandement les performances d'extraction.

L'étape d'extraction peut être également éventuellement accompagnée ou non d'une réaction chimique par exemple d'une délignification dans le cas où le matériau est du bois réalisée par exemple en présence d'ammoniaque, d'une amine, d'un alcool ou d'un mélange à l'état supercritique d'un de ces composés avec le $CO_2$.

L'étape d'extraction peut aussi être éventuellement suivie d'une étape d'imprégnation visant à renforcer ou à modifier les caractéristiques chimiques, physiques ou mécaniques du bois.

Ainsi, à partir de bois naturel l'extraction des produits volatils du type terpènes légers, acide gras ou encore de l'eau permet d'ouvrir la porosité structurale. Dans ce cas, une imprégnation d'un polymère ou de précurseurs polymérisables est envisageable dans la place laissée vacante par l'étape d'extraction.

L'installation pour la mise en oeuvre du procédé de l'invention est caractérisée en ce qu'elle comprend des moyens de mise en contact d'un matériau avec un fluide à l'état supercritique, des moyens pour amener un fluide gazeux dans des conditions normales de température et de pression à l'état supercritique, et des moyens pour introduire un ou plusieurs additifs dans le fluide à l'état supercritique, un desdits additifs étant un surfactant spécifique.

De façon avantageuse, l'installation selon l'invention peut également comprendre des moyens de séparation qui permettent de séparer le fluide-solvant des composés inorganiques et éventuellement organiques extraits.

Avantageusement, des moyens de recyclage du fluide, ainsi que des moyens de purification du fluide avant son recyclage sont prévus.

Enfin, l'installation comprend des moyens de régulation de la pression qui permettent de réguler la pression dans les différentes étapes du procédé.

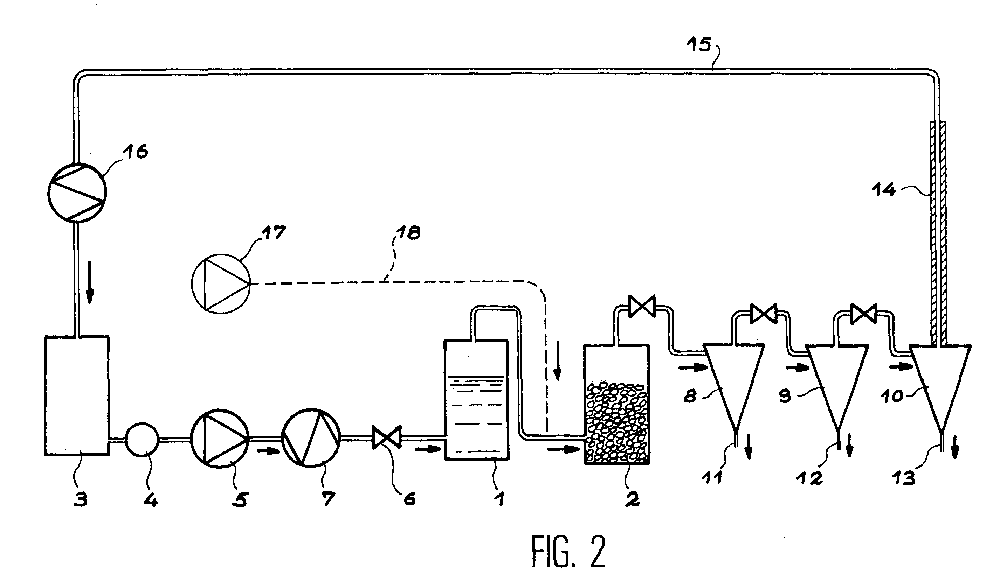

La figure 2 représente de manière schématique une vue latérale en coupe de l'installation selon l'invention.

Il est bien évident qu'une telle figure ne représente qu'un exemple de réalisation d'une installation et qu'elle n'est donnée qu'à titre illustratif et non limitatif.

Sur cette figure, sont représentés des moyens de mise en contact d'un matériau tel qu'un matériau à base de bois sous la forme de deux extracteurs ou autoclaves 1 et 2 placés en série, il est bien évident que l'installation peut ne comprendre qu'un seul extracteur, ou bien qu'elle peut au contraire comprendre plus de deux de ces appareils par exemple jusqu'à 4.

Dans chacun des extracteurs 1, 2 est placé le matériau, par exemple le matériau à base de bois, par exemple sous la forme de copeaux, et la température de chacun des extracteurs ou autoclaves est régulée par des moyens adéquats tels que par exemple une double enveloppe thermostatée.

Le volume des extracteurs est variable, il est fonction notamment de la quantité de matériau à traiter, il peut être facilement déterminé par l'homme du métier.

L'installation comprend également des moyens pour amener un fluide à l'état supercritique. Ainsi, sur la figure 2, le fluide, par exemple du $CO_2$ à l'état gazeux en provenance d'une canalisation 15 de recyclage est-il refroidi et liquéfié par un échangeur "froid" 16. Le fluide est pompé ensuite à partir d'une réserve liquide 3, par l'intermédiaire d'un débitmètre 4, à un débit variable par exemple de 10 à 1000 kg/h, à l'aide d'une pompe 5, par exemple une pompe de type membrane ou à piston, vers l'extracteur 1.

Avant d'être introduit dans l'extracteur 1 par l'intermédiaire d'une vanne 6, le fluide, par exemple le $CO_2$ pompé, est réchauffé dans un échangeur dit échangeur "supercritique" 7 dans lequel il est réchauffé en général au-delà de la température critique qui est par exemple de 31,1°C dans le cas du $CO_2$.

Dans le cas de l'installation représentée sur la figure 2, celle-ci comprend des moyens de séparation reliés par exemple au sommet du deuxième extracteur ou autoclave et qui comprennent par exemple trois séparateurs (8,9, 10) de type cyclonique reliés en série, le dernier séparateur (10) étant ici un séparateur à reflux thermique.

Il est bien évident que le nombre, le type et la succession des séparateurs peuvent varier.

Les produits extraits du matériau à traiter tel que le bois sont soutirés (11, 12, 13) par exemple à la base des séparateurs et récupérés, soumis à des opérations de séparation ou d'extraction par exemple centrifugation, décantation ou extraction liquide/liquide ou détruites.

Le gaz issu de la séparation est épuré de manière poussé dans les moyens d'épuration que l'on a représentés ici sous la forme d'une colonne à reflux ou d'une colonne à charbon actif (14) placée sur les moyens de recyclage du fluide. Ces derniers comprennent une canalisation (15) qui renvoient le fluide gazeux vers l'échangeur froid (16).

Sur la figure 2, on a également représenté des moyens d'injection d'un additif ou cosolvant, sous la forme d'une pompe haute pression (17) débitant une quantité connue de cosolvant et d'une canalisation (18).

On peut également introduire le cosolvant ou additif dans le premier autoclave (1).

A condition que la solubilité ne soit pas trop grande, par barbotage, le fluide tel que le $CO_2$ va se charger plus ou moins en fonction du temps de contact entre les deux corps. Ainsi à l'entrée de l'autoclave d'extraction, le fluide supercritique sera une solution homogène de fluide tel que de $CO_2$ et de cosolvant. On peut aussi préalablement mélanger la charge de matériau à traiter par exemple de bois, par exemple en copeaux à une proportion connue de cosolvant avant l'opération d'extraction.

Enfin, l'installation comprend des moyens de régulation, notamment de la pression, dans les différentes parties du procédé, qui comprennent une chaîne de régulation composée de capteurs de pression, de régulateurs et de vannes à aiguille pilotées pneumatiquement.

## EXEMPLE 1

On a réalisé l'extraction de composé inorganiques à partir de bois par le procédé de l'invention en utilisant une installation analogue à celle décrite dans la figure 2.

Le volume utile de l'extracteur (extracteur 1 ou 2) est de 0,73 litre, permettant le traitement d'une charge de copeaux de bois de 200 à 250 grammes. Cet autoclave est réchauffé au moyen d'une double enveloppe thermostatée.

Le débit de la pompe de $CO_2$ peut varier de 7 à 15 kg/h.

Le $CO_2$ pompé à partir d'une réserve liquide est ensuite réchauffé en général au-delà de la température critique qui est de 31,1°C. Un cosolvant peut être utilisé, pour cela on utilise généralement le premier autoclave dans lequel on aura introduit le cosolvant.

On a tout d'abord étudié l'extraction de composés inorganiques de type CCA.

Les copeaux de bois d'une granulométrie de 0,6 mm à 1,2 mm, proviennent d'un broyat de pièces massives de dimensions 50 mmx15 mmx7 mm, d'essence de pin sylvestre. Cette extraction peut être réalisée sur n'importe quelle essence de bois ou de matériaux à base de bois.

Les solutions d'imprégnation sont des solutions commerciales standards à base d'oxydes de chrome, cuivre et arsenic.

Les analyses sont réalisées par absorption atomique après minéralisation des échantillons de bois par un mélange $HCl/HNO_3$(3/1 v/v) au reflux pendant 2 heures.

Deux types d'additifs ont été mis en oeuvre lors des trois essais réalisés : à savoir le méthanol à 3% dans le $CO_2$, et un surfactant de la famille des polyfluoroéthers d'une masse molaire de 2500 g/mole et commercialisé sous la dénomination de KRYTOX® 157 FSL.

On a également fait varier la proportion d'eau mise en oeuvre en association avec le KRYTOX qui est de 100% et 200%, la teneur en KRYTOX étant de 100%.

Les teneurs en eau ou en KRYTOX des broyats sont exprimées en pourcentage par rapport à la charge initiale.

Les conditions opératoires sont les suivantes :

pression : 300 bars,
température : 80°C
masse volumique du $CO_2$ : 1 745 kg/m$^3$,
temps de contact : 24
taux de solvant : 107

Les résultats obtenus lors des trois essais sont regroupés dans le tableau I suivant où les teneurs en polluants sont exprimées en g pour 100 g de bois.

TABLEAU I

| Composés inorganiques | $CO_2$ + 3%MetOH eau ≈ 0% | | $CO_2$ + KRYTOX 10% eau ≈ 100% | | $CO_2$ + KRYTOX 10% eau ≈ 200% | |
|---|---|---|---|---|---|---|
| | Référence | final | Référence | final | Référence | final |
| Cu | 0,57 | 0,48 | 0,97 | 0,72 | 0,97 | 0,94 |
| Cr | 2,54 | 2,54 | 4,49 | 3,52 | 4,49 | 4,45 |
| As | 2,82 | 2,75 | 4,7 | 3,25 | 4,7 | 4,1 |
| Total | 5,93 | 5,77 | 10,16 | 7,49 | 10,16 | 9,49 |
| Rendement d'extraction % | | 3 | | 26 | | 7 |

EP 0 930 925 B1

Le fait qu'un cosolvant polaire tel que le méthanol n'ait aucune influence alors que le "couple" polymère perfluoré et eau en a dans certaines proportions, permet d'affirmer que l'extraction est pilotée par un effet micellaire.

EXEMPLE 2

On a réalisé l'extraction de composés inorganiques à partir d'une matrice solide poreuse par le procédé de l'invention en utilisant une installation (non représentée) constituée de de deux modules : un module d'extraction et un module de séparation.

Le $CO_2$, provenant d'une réserve de stockage est pressurisé à 7 Mpa par l'intermédiaire d'une première pompe, puis traverse un échangeur froid. Il est ensuite stocké à l'état liquide dans un autoclave (7 Mpa et 278 K), puis transféré jusque vers une deuxième pompe où il est porté à la pression d'extraction souhaitée.

Il est ensuite réchauffé dans un échangeur jusqu'à la température d'extraction.

Le $CO_2$, à l'état supercritique (P>7,3 Mpa, T>304 K) pénètre dans le module d'extraction, où il est mis en contact avec la charge à traiter par exemple avec une masse m de sable pollué en sel métallique. Les caractéristiques de l'installation sont regroupées dans le tableau II.

TABLEAU II

| Pression maximale | 30 MPa |
|---|---|
| Température maximale | 353 K |
| Débit pompe Co$_2$ | 0-15 kg/h |
| Extracteurs | 1 l x 2 |
| Séparateurs | 0,3 l x 2 |

Le $CO_2$, chargé en ion métallique, sous la forme d'une micelle due à l'action de l'agent surfactant, passe ensuite dans le module de séparation, où s'effectue la séparation solvant-extrait.

Le $CO_2$, épuré et gazeux, est condansé pour être stocké à l'état liquide dans un pot de réserve de $CO_2$.

Après un temps d'extraction choisi (tl), la pompe $CO_2$ est arrêtée et le circuit totalement déchargé du $CO_2$ par une série d'évents. L'extrait est recueilli au niveau de chaque séparateur.

Le support ou matrice sur lequel est réalisé l'extraction est du sable de silice (silice et Kaolin) dont les caractéristiques sont indiquées dans le tableau III

TABLEAU III:

| Caractéristiques du support | |
|---|---|
| Granulométrie | 0,8 à 2,5 mm |
| Diamètre des grains | 2-2,5 : 20 % |
| | 1,6-2 : 40 % |
| | 1,25-1,6 : 25 % |
| | 1-1,25 : 10 % |
| | 0,8-1 : 5% |
| Propriétés chimiques | $SiO_2$ : 99 % |
| | $Al_2O_3$ : 0,3 % |
| | $Fe_2O_3$ : 0,1 % |
| | $Na_2O + K_2O$ : < 0,15 % |
| | $CaO + MgO$ : < 0,15 % |
| Propriétés physiques | Humidité à l'ensachage : <0,1% |
| | Masse volumique réelle : 2,7 g.cm$^{-3}$ |
| | Masse volumique apparente: 1,6 g.cm$^{-3}$ |
| | pH : 7,5 |

On prépare des matrices synthétiques en contaminant artificiellement le lit de silice poreux décrit ci-dessus par des sels d'uranyles. Les conditions utilisées pour la préparation du support ou matrice sont présentées dans le tableau IV

Une première étape consiste à enrober le sable par le nitrate d'uranyle à une teneur en uranium de 868 ppm. Cette valeur correspond aux valeurs des contamination rencontrées et que l'on peut situer dans la gamme 1 g/kg à 10 g/kg.

Cette étape est précédée par une procédure d'imprégnation par le soluté et une procédure de séchage. Toutes les évaporations sont réalisées par l'intermédiaire d'un évaporateur rotatif. Une attention toute particulière est portée à l'élimination totale du solvant de dissolution (méthanol), afin d'éviter que ce dernier ne soit à l'origine d'une augmentation des efficacités d'extraction due à un effet de cosolvant pour le $CO_2$ supercritique.

La procédure utilisée est la suivante :

- mise en contact d'une masse m1 de soluté dans un volume V de solvant volatil S, avec une masse $m_2$ de support ;
- agitation de 30 minutes ;
- évaporation du solvant pendant 4 heures à une température T1 ;
- séchage de la matrice imprégnée sous vide dans une étuve à la température T2 ;
- mise en contact d'une masse $m_3$ de mélange eau/Krytox avec 900 g de matrice imprégnée directement dans le panier d'extraction.

Le solvant de dissolution utilisé est du méthanol de quantité Prolabo® Normapur® pour analyses et de pureté minimale 99 %.

Tableau IV :

| Conditions opératoires pour l'imprégnation du support avec du nitrate d'uranyle hexahydraté en tant que soluté | |
|---|---|
| Masse molaire du soluté (g.mol-1) | 502,13 |
| Solvant de dissolution (S) | méthanol |
| Masse de soluté ml (g) | 2,2 |
| Volume de solvant : V(ml) | 100 |
| Masse de support $m_2$ (g) | 1200 |
| T1 (K) | 343 |
| T2 (K) | 313 |
| $m_3$ (g) | 40 |

On procède ensuite à l'extraction proprement dite par le procédé de l'invention à partir de la matrice imprégnée, contaminée, ainsi préparée.

La teneur en métal de la matrice avant et après extraction est déterminée par spectroscopie d'émission atomique (modèle Perkin Elmer 2380). Les échantillons de matrices imprégnées (100 à 400 g) sont d'abord digérés pendant 10 heures dans de l'acide nitrique 15 N en chauffant le mélange à 60 °C et en agitant vigoureusement. Un volume connu de ces solutions (1 à 2 ml) est ensuite prélevé et dilué dans de l'eau déminéralisée. Les concentrations en métal analysées sont comprises entre 0 et 50 mg/l

le rendement d'extraction est alors défini par rapport au métal suivant la relation suivante :

$$(\text{masse}_{\text{métal initiale}} - \text{masse}_{\text{métal finale}}) / (\text{masse}_{\text{métal iniiale}})$$

Deux essais d'extraction ont été effectués, dans le cas du nitrate d'uranyle en faisant varier le rapport Krytox/eau. Le tableau V récapitule les différentes consitions expérimentales, et le tableau VI donne les résultats d'extractions obtenus.

Tableau V :

| Conditions d'extraction utilisées | |
|---|---|
| Fluide | $CO_2$ |

Tableau V :  (suite)

| Conditions d'extraction utilisées | |
|---|---|
| Pression | 30,4 MPa |
| Température | 323 K |
| Débit pompe $Co_2$ | 7 kg/h |
| Durée d'extraction | 3 h |

Tableau VI :

| résultats de l'extraction | |
|---|---|
| Rapport eau/krytox | % d'extraction |
| 20 g/20g | 55,34 |
| 36,4g/3,6g | 48,64 |

Il est ainsi démontré que des rendements d'extraction supérieur à 50 % de l'uranium, sous forme de nitrate d'uranyle peuvent être obtenus en mettant en oeuvre le procédé de l'invention sur une matrice sable.


**Revendications**

1. Procédé d'extraction de composés inorganiques et/ou organiques à partir d'un matériau, caractérisé en ce que l'on met en contact ledit matériau avec un fluide dense sous une pression (P) et une température (T) telles que le fluide soit à l'état supercritique, en ce qu'un ou plusieurs additif(s) est(sont) ajouté(s) au fluide supercritique, un desdits additifs étant un surfactant choisi parmi les polyperfluoroéthers de formule suivante : F $(CF_3CFCF_2O)_nCF_3CFCOOH$, et en ce que les composés à extraire comprennent au moins un composé inorganique.

2. Procédé selon la revendication 1, caractérisé en ce que suite à l'extraction, le fluide solvant et les extraits sont séparés par une ou plusieurs étapes de séparation physico-chimiques et le fluide solvant sous forme gazeuse est recyclé.

3. Procédé selon la revendication 1, caractérisé en ce qu'un des additifs est un cosolvant.

4. Procédé selon la revendication 3, caractérisé en ce que le cosolvant est choisi parmi les alcools, les cétones et leurs mélanges.

5. Procédé selon la revendication 4, caractérisé en ce que ledit cosolvant est présent à une concentration de 1 à 10% en poids par rapport au poids du matériau.

6. Procédé selon la revendication 3, caractérisé en ce que le cosolvant est l'eau.

7. Procédé selon la revendication 6, caractérisé en ce que l'eau est présente à une concentration totale de 1 à 300% en poids par rapport au poids du matériau.

8. Procédé selon la revendication 1 caractérisé en ce que ledit composé inorganique est choisi parmi les métaux ou métalloïdes libres et les composés de ces métaux ou métalloïdes

9. Procédé selon la revendication 8 caractérisé en ce que lesdits métaux ou métalloïdes sont choisis parmi les métaux lourds ; les métaux de la famille du cuivre ; les métaux de la famille du chrome ; les lanthanides ; les actinides ; les transuraniens ; les métaux alcalins et alcalino-terreux ; l'arsenic, le bore ; et les isotopes radioactifs ou non de ceux-ci.

10. Procédé selon l'une quelconque des revendications 8 et 9 caractérisé en ce que lesdits composés de métaux ou

EP 0 930 925 B1

métalloïdes sont choisis parmi les oxydes, sels et composés organométalliques de ceux-ci.

11. Procédé selon la revendication 9 caractérisé en ce que ledit composé inorganique est choisi parmi les composés à base de cuivre, chrome et arsenic (CCA).

12. Procédé selon la revendication 1, caractérisé en ce que le surfactant est présent à une concentration de 1 à 50% en poids par rapport au poids initial du matériau.

13. Procédé selon la revendication 1 caractérisé en ce que les additifs comprennent l'association d'eau et de surfactant.

14. Procédé selon la revendication 1 caractérisé en ce que le(les) composé(s) organique(s) à extraire sont comprennent au moins un composé choisi parmi les hydrocarbures polyacycliques aromatiques HPA, les chlorophénols, les polychlorophénols, les polychlorobiphényles (PCB), le lindane, le triazole, les insecticides et fongicides organiques, et les composés fluorés.

15. Procédé selon la revendication 1, caractérisé en ce que l'on modifie les caractéristiques des composés organiques à extraire afin de les rendre plus solubles dans le fluide supercritique.

16. Procédé selon la revendication 15, caractérisé en ce que les composés organiques à extraire sont des chlorophénols et en ce qu'on les modifie par acétylation en les faisant réagir avec de l'anhydride acétique en excès, en présence ou non de triéthylamine.

17. Procédé selon la revendication 1 caractérisé en ce que le matériau est un matériau solide.

18. Procédé selon la revendication 17 caractérisé en ce que ledit matériau solide est un matériau solide poreux.

19. Procédé selon la revendication 18 caractérisé en ce que ledit matériau est choisi parmi les sols et les matériaux à base de bois.

20. Procédé selon la revendication 18 caractérisé en ce que le matériau est un matériau liquide.

21. Procédé selon la revendication 20 caractérisé en ce que ledit matériau liquide est une solution ou suspension.

**Patentansprüche**

1. Verfahren zur Extraktion anorganischer und/oder organischer Verbindungen aus einem Material, **dadurch gekennzeichnet,** dass man das genannte Material mit einem dichten Fluid in Kontakt bringt, dessen Druck (P) und Temperatur (T) so sind, dass es sich im überkritischen Zustand befindet, dass man dem überkritischen Fluid ein oder mehrere Additive hinzufügt, wobei eines dieser Additive ein unter den Polyperfluorethern der Formel F $(CF_3CFCF_2)_nCF_3CFCOOH$ ausgewählter grenzflächenaktiver Stoff ist, und dass die zu extrahierenden Verbindungen wenigstens eine anorganische Verbindung enthalten.

2. Verfahren nach Anspruch 1, dadurch gekennzeichnet, dass als Folge der Extraktion das Lösungsfluid und die Extrakte durch einen oder mehrere physikalisch-chemische Trennschritte getrennt werden und das gasförmige Lösungsfluid recycelt wird.

3. Verfahren nach Anspruch 1, dadurch gekennzeichnet, dass eines der Additive ein Kosolvent ist.

4. Verfahren nach Anspruch 3, dadurch gekennzeichnet, dass das Kosolvent unter den Alkoholen und den Ketonen und ihren Mischungen ausgewählt wird.

5. Verfahren nach Anspruch 4, dadurch gekennzeichnet, dass die Konzentration des genannten Kosolvents 1 bis 10 Gew.% beträgt, bezogen auf das Gewicht des Materials.

6. Verfahren nach Anspruch 3, dadurch gekennzeichnet, dass das Kosolvent Wasser ist.

**15**

**7.** Verfahren nach Anspruch 6, dadurch gekennzeichnet, dass die Gesamtkonzentration des Wassers 1 bis 300 Gew. % beträgt, bezogen auf das Gewicht des Materials.

**8.** Verfahren nach Anspruch 1, dadurch gekennzeichnet, dass die genannte anorganische Verbindung unter den freien Metallen oder Metalloiden und den Verbindungen dieser Metalle oder Metalloide ausgewählt wird.

**9.** Verfahren nach Anspruch 8, dadurch gekennzeichnet, dass die genannten Metalle oder Metalloide ausgewählt werden unter den Schwermetallen, den Metallen der Chrom-Gruppe, den Lanthaniden, den Actiniden, den Transuranen, den alkalischen und erdalkalischen Metallen, dem Arsen, dem Bor, und den radioaktiven oder nicht-radioaktiven Isotopen von diesen.

**10.** Verfahren nach einem der Ansprüche 8 und 9, dadurch gekennzeichnet, dass die genannten Verbindungen von Metallen oder Metalloiden ausgewählt werden unter den Oxiden, Salzen und organometallischen Verbindungen von diesen.

**11.** Verfahren nach Anspruch 9, dadurch gekennzeichnet, dass die genannte anorganische Verbindung unter den Verbindungen auf Kupfer-, Chrom- und Arsenbasis (CCA) ausgewählt wird.

**12.** Verfahren nach Anspruch 1, dadurch gekennzeichnet, dass die Konzentration des grenzflächenaktiven Stoffs 1 bis 50 Gew.% beträgt, bezogen auf das Anfangsgewicht des Materials.

**13.** Verfahren nach Anspruch 1, dadurch gekennzeichnet, dass die Additive die Assoziation von Wasser und einem grenzflächenaktiven Stoff umfassen.

**14.** Verfahren nach Anspruch 1, dadurch gekennzeichnet, dass die zu extrahierende(n) organische(n) Verbindung(en) wenigstens eine Verbindung umfasst (umfassen), die ausgewählt wird unter den polyacyclischen aromatischen Kohlenwasserstoffen HPA, den Chlorphenolen, den Polychlorphenolen, den Polychlorbiphenylen (PBC), dem Lindan, dem Triazol, den organischen Insektiziden und Fungiziden.

**15.** Verfahren nach Anspruch 1, dadurch gekennzeichnet, dass man die Charakteristika der zu extrahierenden organischen Verbindungen modifiziert, um sie in dem überkritischen Fluid löslicher zu machen.

**16.** Verfahren nach Anspruch 15, dadurch gekennzeichnet, dass die zu extrahierenden organischen Verbindungen Chlorphenole sind und dass man sie durch Acetylisierung modifiziert, indem man sie mit überschüssigem Essigsäureanhydrid reagieren lässt, wobei Triethylamin beteiligt ist oder nicht.

**17.** Verfahren nach Anspruch 1, dadurch gekennzeichnet, dass das genannte Material ein festes Material ist.

**18.** Verfahren nach Anspruch 17, dadurch gekennzeichnet, dass das genannte feste Material ein poröses festes Material ist.

**19.** Verfahren nach Anspruch 18, dadurch gekennzeichnet, dass das genannte Material zwischen Böden und Materialien auf Holzbasis gewählt wird.

**20.** Verfahren nach Anspruch 18, dadurch gekennzeichnet, dass das Material ein flüssiges Material ist.

**21.** Verfahren nach Anspruch 20, dadurch gekennzeichnet, dass das Material eine Lösung oder Suspension ist.

**Claims**

**1.** Method of extracting inorganic and/or organic compounds from a material, characterized in that said material is brought into contact with a dense fluid under a pressure (P) and a temperature (T) such that the fluid is in a supercritical state, in that one or more additives are added to the supercritical fluid, one of said additives being a surfactant chosen from among polyperfluoroethers of the following formula: $F(CF_3CFCF_2O)_nCF_3CFCOOH$ and in that the compounds to be extracted include at least one inorganic compound.

**2.** Method according to claim 1, characterized in that, following extraction, the solvent fluid and the extracts are separated by one or more physicochemical separation steps and the solvent fluid is recycled in gaseous form.

3. Method according to claim 1, characterized in that one of the additives is a co-solvent.

4. Method according to claim 3, characterized in that the co-solvent is chosen from among the alcohols, the ketones and their mixtures.

5. Method according to claim 4, characterized in that the co-solvent is present at a concentration of from 1 to 10% by weight with respect to the weight of the material.

6. Method according to claim 3, characterized in that the co-solvent is water.

7. Method according to claim 6, characterized in that the water is present at a total concentration of from 1 to 300% by weight with respect to the weight of the material.

8. Method according to claim 1, characterized in that said inorganic compound is chosen from among the free metals or metalloids and compounds of these metals or metalloids.

9. Method according to claim 8, characterized in that said metals or metalloids are chosen from among the heavy metals; the metals of the copper family; the metals of the chromium family; the lanthanides; the actinides; the transuranic elements; the alkali and alkaline earth metals; arsenic, boron; and isotopes of these elements radioactive or non-radioactive.

10. Method according to either of the claims 8 and 9, characterized in that said compounds of metals or metalloids are chosen from among the oxides, salts and organometallic compounds of these elements.

11. Method according to claim 9, characterized in that said inorganic compound is chosen from among compounds based on copper, chromium and arsenic (CCAs).

12. Method according to claim 1, characterized in that the surfactant is present at a concentration of from 1 to 50% by weight with respect to the initial weight of the material.

13. Method according to claim 1, characterized in that the additives comprise the mixture of water and surfactant.

14. Method according to claim 1, characterized in that the organic compound or compounds to be extracted comprise at least one compound chosen from among polyacylic aromatic hydrocarbons (PAHs), chlorophenols, polychlorophenols, polychlorobiphenyls (PCBs), lindane, triazole, organic insecticides and fungicides and fluorinated compounds.

15. Method according to claim 1, characterized in that the characteristics of the organic compounds to be extracted are modified so as to make them more soluble in the supercritical fluid.

16. Method according to claim 15, characterized in that the organic compounds to be extracted are chlorophenols and in that they are modified by acetylation by reacting them with an excess of acetic anhydride in the presence or not of triethylamine.

17. Method according to claim 1, characterized in that the material is a solid material.

18. Method according to claim 17, characterized in that said solid material is a porous solid material.

19. Method according to claim 18, characterized in that said material is chosen from among soils and materials based on wood.

20. Method according to claim 18, characterized in that the material is a liquid material.

21. Method according to claim 20, characterized in that said liquid material is a solution or suspension.

FIG. 1

FIG. 2